# EUROPÄISCHE PATENTANMELDUNG

(11) **EP 1 758 051 A1**
(43) Veröffentlichungstag der Anmeldung: **28.02.2007**
(21) Anmeldenummer: 05018199.9
(22) Anmeldetag: 22.08.2005
(51) Int. Cl.: G06Q 10/00

(54) **System, Verfahren und Computerprogrammprodukt zur arbeitsflussbasierten Datenverarbeitung**

(71) Anmelder: UBS AG, 8001 Zürich (CH)
(72) Erfinder: Amrhein, Peter, 8707 Uetikon am See (CH); Walser, René, 7323 Wangs (CH)
(74) Vertreter: Röthinger, Rainer

(57) **Zusammenfassung**

Es wird ein Ansatz zur arbeitsflussbasierten Datenverarbeitung beschrieben, wobei im Rahmen des Arbeitsflusses eine Vielzahl von Anzeigeseiten mittels Arbeitsfluss-Steuerbefehlen interaktiv durchlaufen werden. Ein geeignetes Computersystem umfasst wenigstens ein Anwenderterminal mit einer Anwenderschnittstelle für die Seitenanzeige (802) und für die Eingabe von Anwenderdaten und von Arbeitsfluss-Steuerbefehlen, ein oder mehrere Basissysteme mit zugehörigen Basisdatenbanken, in denen Basisdaten enthalten sind, wenigstens eine Cache-Datenbank, in welcher die Anwenderdaten und ein selektiver Basisdatenauszug gecached sind (806), ein oder mehrere Service-Systeme mit Services (810) zum Durchführen von Datenverarbeitungsschritten auf der Grundlage von aus der Cache-Datenbank bezogenen Daten sowie einen Mechanismus (804) zur Erzeugung eines auf den Aufruf wenigstens eines Services (810) gerichteten Request als Reaktion auf einen Arbeitsfluss-Steuerbefehl, wobei der Service (810) asynchron bezüglich der Anzeige einer neuen Anzeigeseite aufgerufen wird, wenn der Aufbau der neuen Anzeigeseite unabhängig vom Ergebnis des mittels des Request aufgerufenen Services (810) ist.

## Beschreibung

### Gebiet der Erfindung

Die Erfindung betrifft das Gebiet der Datenverarbeitung unter Verwendung von Arbeitsflüssen ("Workflows"). Genauer gesagt betrifft die Erfindung ein System, ein Verfahren und ein Computerprogrammprodukt zur arbeitsflussbasierten Datenverarbeitung mit reduzierten Antwortzeiten.

### Hintergrund der Erfindung

Ganz allgemein versteht man unter einem Arbeitsfluss einen aus mehreren Arbeitsschritten zusammengesetzten Bearbeitungsvorgang, der von einem oder mehreren Bearbeitern erledigt wird. Dabei sind die Arbeitsschritte zumeist in einer vorab definierten Reihenfolge abzuarbeiten. Das Abarbeiten eines neuen Arbeitsschrittes setzt in der Regel voraus, dass einer oder mehrere vorhergehende Arbeitsschritte vollständig abgearbeitet wurden. Diese Notwendigkeit ergibt sich daraus, dass das Ergeb-nis der vorhergehenden Arbeitsschritte im neuen Arbeitsschritt verwendet wird und diesen daher beeinflusst.

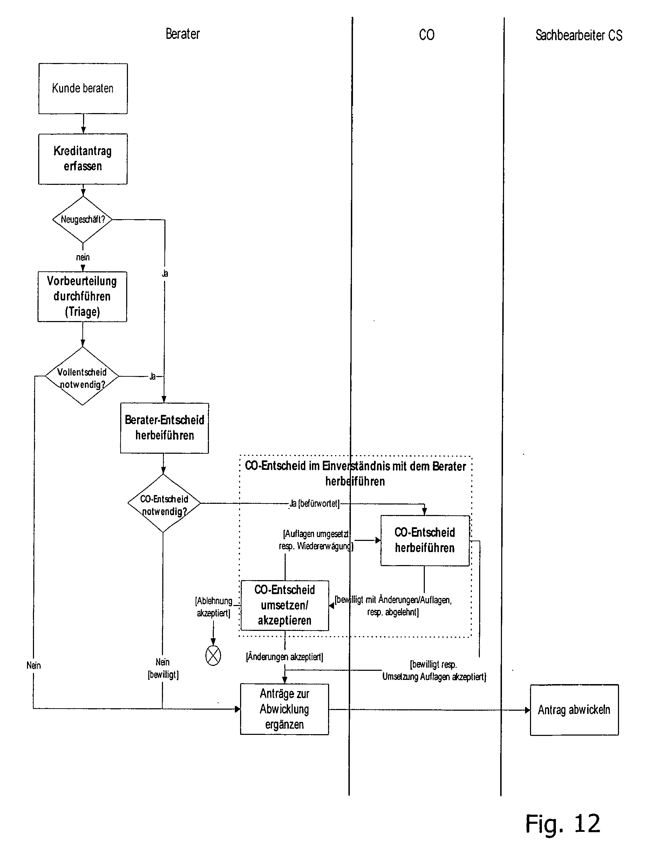

Ein Beispiel eines aus einer Vielzahl von Arbeitsschritten zusammengesetzten Bearbeitungsvorganges ist die in Fig. 12 dargestellte Bearbeitung eines Kreditantrags. Fig. 12 gibt einen groben Überblick über die einzelnen Arbeitsschritte und die beteiligten Bearbeiterrollen bei der Vergabe von Krediten. Insgesamt sind an der Bearbeitung drei unterschiedliche Bearbeiterrollen beteiligt. Die für die Pflege der Kundenbeziehungen verantwortlichen Bearbeiter heissen Berater. Berater arbeiten an der "Front", in der "Beratung", im "Vertrieb". Kreditentscheide werden - so sie nicht direkt von Beratern entschieden werden können - abschliessend durch Credit Officers (COs) gefällt. Credit Officers werden oft auch als Entscheider bezeichnet. Die Abwicklung schließlich - Vertragserstellung, Auszahlungen usw. - wird durch Sachbearbeiter in der Organisation Credit Services (CS) erledigt.

Im Beratungsgespräch, das der Berater mit dem Kunden (der Gegenpartei) durchführt, werden u.a. dessen Kreditbedürfnisse ermittelt. Der Berater erfasst die im Beratungsgespräch ermittelten Kreditanträge. Bei kaum oder nicht risikorelevanten Änderungen an bestehenden Kredit-Engagements wird zur Minimierung des Arbeitsaufwands auf eine vollständige Risikobeurteilung der Kundenposition (Vollentscheid) verzichtet. Mittels der Durchführung einer Vorbeurteilung (Triage) werden derartige, risikoarme Änderungen identifiziert. Die Vorbeurteilung erfolgt antragsweise. Kann bei allen in einer Vorlage zusammengefassten Anträgen einer Gegenpartei auf einen Vollentscheid verzichtet werden, können diese direkt mit den abwicklungsrelevanten Informationen ergänzt und für die Abwicklung freigegeben werden. Neugeschäfte verlangen hingegen immer nach einem Vollentscheid. Als Maß für die Kreditfähigkeit eines Kunden gilt hierbei das Finanzierungspotential (bei kommerziellen Kunden) bzw. die Tragbarkeit (bei Privatkunden).

Für den Entscheid, ob und unter welchen Voraussetzungen dem Kunden der gewünschte Kredit gewährt werden kann, wird der Kreditantrag (ggf. bestehend aus mehreren einzelnen Anträgen) - zusammen mit dem u.U. bereits bestehenden Kredit-Engagement - der Bonität und den Sicherheiten , also der Kreditfähigkeit des Kunden gegenübergestellt. Für die Beurteilung der Anträge des Kunden und insbesondere dessen Bonität wird Wert auf ein Gesamtkundenbild gelegt. Folgerichtig fließt das Kredit-Engagement des späteren Vertragspartners nicht isoliert in die Beurteilung ein. Vielmehr werden auch die mit dem Kunden juristisch oder wirtschaftlich verbundenen Rechtspersönlichkeiten und, falls vorhanden, deren Anträge in die Beurteilung miteinbezogen. Die Gesamtheit der Kunden, die in die Bonitätsanalyse miteinbezogen werden müssen, bilden die "vorzulegende Gegenpartei". Gleichzeitig laufende Anträge einer Gegenpartei bilden eine Vorlage. Es ist nur eine offene (nicht entschiedene) Vorlage pro Gegenpartei gleichzeitig zulässig. Mittels einer Checkliste werden von vorneherein aussichtslose Anträge aus dem weiteren Kreditvergabeprozess ausgeschlossen.

Der Berater wird bei seinem Entscheid durch ein vorab definiertes Entscheidungsschema unterstützt. In dieses fließen die erfassten Zahlen und Antworten ein und münden in einer Kategorisierung der Vorlage (und zwar in weiss, grau oder schwarz). Bei einem "weissen" Entscheid kann der Berater bei genügender Kompetenz die Vorlage direkt bewilligen. Die Verantwortung für den Entscheid liegt in diesem Fall vollumfänglich beim Berater. Nachdem der Berater die Vorlage bewilligt hat, wird im Kreditvergabeprozess direkt mit der Abwicklung fortgefahren. Bei einem grauen oder schwarzen Systementscheid oder bei zu geringer Kompetenz wird ein CO-Entscheid notwendig. Befürwortet der Berater die Vorlage, leitet er sie mit einer Begründung direkt an einen CO weiter.

Der CO analysiert die Vorlage anhand der vom Berater erfassten Informationen, seiner Beurteilungen und etwaiger Beilagen. Der Umfang der Erfassung und der mitzuliefernden Unterlagen ist darauf ausgelegt, dass der CO die Vorlage möglichst ohne Rückfragen beim Berater entscheiden kann.

Der CO kann die Vorlage unverändert bewilligen, mit Änderungen bewilligen, mit Auflagen bewilligen, ablehnen oder zurückweisen. Ist die Beurteilung des Beraters unvollständig oder gibt sie offensichtlich nicht die aktuelle Sicht auf den Kunden oder dessen Sicherheiten wieder, weist der CO die Vorlage zurück. Umfasst eine Vorlage sowohl unkritische Anträge, die der CO einfach bewilligen kann, als auch Anträge, deren Bewilligung er an Auflagen knüpfen will, kann er seinen Entscheid anstatt für die gesamte Vorlage auch pro Antrag fällen. Weiterhin kann der CO auch Maßnahmen und Termine setzen, die der Berater umsetzen muss. Der CO leitet die gesamte Vorlage dann an den Berater zurück.

Der Berater hat dann den CO-Entscheid in einem nächsten Bearbeitungsschritt umzusetzen bzw. zu akzeptieren. Dieser Schritt ist abhängig vom Entscheid des CO. Hat dieser die Vorlage (bzw. einzelne Anträge) unverändert bewilligt, ist der Entscheid abgeschlossen und der Berater macht weiter mit der Ergänzung zur Abwicklung. Hat der CO die Vorlage mit Änderungen bewilligt, muss der Berater vor der "Ergänzung zur Abwicklung" die Änderungen des CO bestätigen oder kann einen Wiedererwägungsantrag stellen. Hat der CO die Vorlage mit Auflagen bewilligt, setzt der Berater die Auflagen in Rücksprache mit dem Kunden um. Ist der Berater oder der Kunde mit den Auflagen nicht einverstanden, kann der Berater einen Wiedererwägungsantrag stellen. Sofern der CO die Vorlage abgelehnt hat und ist der Berater mit der Ablehnung des CO nicht einverstanden, stellt er auch in diesem Fall einen Wiedererwägungsantrag. Sonst bestätigt der Berater den ablehnenden Entscheid des COs. Hat der CO die Vorlage zurückgewiesen, kann der Berater eine neue Vorlage erstellen. Die im Rahmen der zurückgewiesenen Vorlage erstellten Anträge und letzten Kundenbildanpassungen werden in die neue Vorlage übernommen.

Hat der Berater alle Auflagen des CO umgesetzt oder stellt er für die gesamte Vorlage oder einzelne Anträge daraus einen Wiedererwägungsantrag, gibt er die gesamte Vorlage an den CO zurück. Ist ein Teil der Anträge in der Vorlage bereits bewilligt, so können diese zur Abwicklung ergänzt und in die Abwicklung gegeben werden, sofern dies durch den CO so bewilligt wurde. Ist die Vorlage oder sind Teile davon bewilligt, legt der Berater die konkreten Produkte und Konditionen fest, stellt die Preise und ergänzt zusätzliche Informationen, die nicht für den Entscheid, wohl aber für die Abwicklung relevant sind. Der Berater bewegt sich dabei in dem zum Entscheid bewilligten Rahmen. Der Sachbearbeiter in Credit Services wickelt schlussendlich die einzelnen Anträge ab.

Mit dem Vormarsch der elektronischen Datenverarbeitung werden viele bislang manuell abgearbeiteten Arbeitsflüsse in einem rechnergestützten Umfeld nachgebildet. Im Rahmen der rechnergestützten Arbeitsflüsse navigieren sich die Benutzer durch eine Vielzahl von Bildschirmseiten, auf denen sie zur Dateneingabe oder Datenbestätigung aufgefordert werden.

Es hat sich herausgestellt, dass bei der herkömmlichen elektronischen Implementierung des in Fig. 12 dargestellten Arbeitsflusses und ähnlich komplexer Arbeitsflüsse die Systemantwortzeiten häufig inakzeptabel sind. Dies gilt vor allem dann, wenn bei Großbanken und anderen Großunternehmen viele Benutzerzugriffe erfolgen und ein umfangreicher bereits existierender Datenpool verwendet werden soll.

Der Erfindung liegt daher die Aufgabe zugrunde, ein einfach skalierbares System und Verfahren anzugeben, welche eine laufzeitoptimierte Bearbeitung auch komplexer rechnergestützter Arbeitsflüsse gestattet.

### Kurzer Abriss der Erfindung

Diese Aufgabe wird gemäß einem ersten Aspekt der Erfindung gelöst durch ein Computersystem zur arbeitsflussbasierten Datenverarbeitung insbesondere im Zusammenhang mit einem computerunterstützten Kreditentscheid, wobei im Rahmen des Arbeitsflusses eine Vielzahl von Anzeigeseiten mittels Arbeitsfluss-Steuerbefehlen interaktiv durchlaufen werden. Das Computersystem umfasst wenigstens ein Anwenderterminal mit einer Anwenderschnittstelle für die Seitenanzeige und für die Eingabe von Anwenderdaten und von Arbeitsfluss-Steuerbefehlen; ein oder mehrere Basissysteme mit zugehörigen Basisdatenbanken, in denen Basisdaten enthalten sind; wenigstens eine Cache-Datenbank, in welche die Anwenderdaten und ein selektierter Basisdatenauszug geladen werden; ein oder mehrere Service-Systeme mit Services zum Durchführen von Datenverarbeitungsschritten auf der Grundlage von aus der Cache-Datenbank bezogenen Daten; und einen Mechanismus zur Erzeugen eines auf den Aufruf wenigstens eines Services gerichteten Request als Reaktion auf einen Arbeitsfluss-Steuerbefehl, wobei der Service asynchron bezüglich der Anzeige einer neuen Anzeigeseite aufgerufen wird, wenn der Aufbau der neuen Anzeigeseite unabhängig von einem Ergebnis des mittels des Request aufgerufenen Services ist; und wenigstens eine Warteschlange zur Serialisierung (zumindest) der auf asynchrone Service-Aufrufe gerichteten Requests.

Die Verwendung einer Cache-Datenbank ermöglicht das Cachen der von den Services benötigten Daten. Auf die gecachten Daten kann dann im Rahmen der bezüglich des Seitenaufbaus asynchron ablaufenden Services zugegriffen werden. Diese Kombination verkürzt die Laufzeiten und führt zu einem rascheren Seitenaufbau. Um etwaige Kollisionen asynchron ablaufender Services zu vermeiden, kann zusätzlich noch wenigstens eine Warteschlange zur Serialisierung der auf asynchrone Service-Aufrufe gerichteten Requests vorgesehen sein. Im Fall von synchronen Service-Aufrufen, können die darauf gerichteten Requests ebenfalls in dieser Warteschlange oder in einer separaten Warteschlange serialisiert werden.

Gemäß einer Ausgestaltung ist wenigstens ein Worker-Prozess funktional zwischen der wenigstens einen Warteschlange und den Service-Systemen angeordnet. Der Worker-Prozess ist zum Auslesen der Warteschlange und zum Weiterleiten der ausgelesenen Requests an die Service-Systeme vorgesehen. Der Worker-Prozess kann auch weitere Aufgaben wie die Format-Konvertierung oder die Validierung von Datenobjekten übernehmen.

Den einzelnen Requests können sowohl Daten in der Cache-Datenbank also auch ein oder mehrere Services zugeordnet sein. In einem solchen Fall ist der Worker-Prozess vorzugsweise dazu ausgebildet, um nach dem Auslesen eines Requests aus der Warteschlange die dem Request zugeordnete Daten aus der Cache-Datenbank auszulesen und an den dem Request zugeordneten Service weiterzuleiten.

Der Worker-Prozess kann von dem Service-System, an das ein Request weitergeleitet wurde, eine Antwort empfangen. Gemäß einer ersten Variante ist die Antwort auf den Status des Abarbeitens des Request gerichtet, so dass der Worker-Prozess einen entsprechenden Status-Eintrag in der Warteschlange für die Requests oder in einer separaten Antwort-Warteschlange vornehmen kann. Gemäß einer weiteren Variante enthält die Antwort eine Validierungsmeldung bezüglich der an das Service-System übergebenen Daten. Die genannten Varianten sind beliebig untereinander und mit der folgenden dritten Variante kombinierbar.

Gemäß der dritten Variante enthält die Antwort vom Service-System übergebene Service-Daten, die der Worker-Prozess in die Cache-Datenbank schreibt. Die Cache-Datenbank fungiert dann als "Postfach", in welches die von asynchron aufgerufenen Services zurück erhaltenen Service-Daten zwischengespeichert werden. Die zwischengespeicherten Service-Daten können dann zu einem späteren Zeitpunkt (etwa wenn der Aufbau einer Seite angefordert wird, deren Aufbau auf den Service-Daten basiert), aus der Cache-Datenbank gelesen werden.

Die Service-Systeme können Service-Datenbanken zur Datenspeicherung umfassen. So ist es denkbar, in den Service-Datenbanken die von Anwendern eingegebenen Anwenderdaten (betreffend z.B. einen bestimmten Geschäftsfall, der Gegenstand des Arbeitsflusses ist) zu speichern. Diese Anwenderdaten lassen sich dann erforderlichenfalls zu einem späteren Zeitpunkt wieder in die Cache-Datenbank laden (z.B. nach einem unbeabsichtigten Löschen der Cache-Datenbank oder nach einem absichtlichen Löschen im Anschluss an einen erneuten Aufruf des Geschäftsfalls). Zusätzlich oder alternativ zu den Anwenderdaten können in den Service-Datenbanken die von den einzelnen Services generierten Service-Daten gespeichert werden.

Die Arbeitsfluss-Steuerbefehle können einen Speicherbefehl umfassen. Zusätzlich oder alternativ hierzu können die Arbeitsfluss-Steuerbefehle einen Befehl zur Anzeige einer neuen Anzeigeseite umfassen. Bei der neuen Anzeigeseite handelt es sich beispielsweise um die im Arbeitsfluss logisch folgende Anzeigeseite.

Die in die Cache-Datenbank geladenen Basisdaten (und optional auch die von den Anwendern eingegebenen Daten oder andere in der Cache-Datenbank enthaltene Daten wie z.B. Service-Daten) können eine begrenzte Gültigkeit aufweisen. So ist es denkbar, dass zumindest die in die Cache-Datenbank geladenen Basisdaten in bestimmten (z.B. regelmäßigen) Abständen gelöscht werden und dass anschließend ein Neubezug zumindest der Basisdaten erfolgt. Das Löschen erfolgt beispielsweise nächtlich. Der Datenneubezug kann im Anschluss an jeden Löschvorgang erfolgen. Zusätzlich oder alternativ hierzu kann der Datenneubezug bei Aufruf eines bestimmten Geschäftsfalles erfolgen.

Wie bereits erläutert, umfasst das Computersystem optional eine oder mehrere Warteschlangen. Vorzugsweise sind die Warteschlangen paarweise vorhanden, wobei in eine erste Warteschlange die Requests zum sukzessiven Auslesen geschrieben werden und in einer zweiten Warteschlange eine Status-Protokollierung des oder der mit einem Request verknüpften Services erfolgt. So kann die zweite Warteschlange einen Anhaltspunkt dafür liefern, ob eine bestimmter Request (und/oder der damit verknüpfte Service) bereits abgearbeitet wurden oder noch in Bearbeitung sind. Die Warteschlangen können auf der Ebene der Cache-Datenbank (z.B. in Tabellenform) angesiedelt sein. Sie können aber auch unabhängig von der Cache-Datenbank mittels einer separaten Komponente implementiert werden.

Zusätzlich zu den asynchronen Requests können im Computersystem auch synchrone Requests vorgesehen werden. So kann immer dann, wenn der Aufbau der neuen Anzeigeseite abhängig von einem Ergebnis des mittels des Request aufgerufenen Services ist, ein Request erzeugt werden, der auf den Aufruf wenigstens eines synchron bezüglich der Anzeige der neuen Anzeigeseite ablaufenden Service gerichtet ist. Die synchronen und asynchronen Request können in separaten Warteschlangen oder in einer gemeinsamen Warteschlange serialisiert werden.

Gemäß einem weiteren Aspekt ist die Erfindung auf ein Verfahren zur arbeitsflussbasierten Datenverarbeitung insbesondere im Zusammenhang mit einem computerunterstützten Kreditentscheid gerichtet, wobei im Rahmen des Arbeitsflusses eine Vielzahl von Anzeigeseiten mittels Arbeitsfluss-Steuerbefehlen interaktiv durchlaufen werden. Das Verfahren enthält die Schritte: Bereitstellen wenigstens eines Anwenderterminals mit einer Anwenderschnittstelle für die Seitenanzeige und für die Eingabe von Anwenderdaten und von Arbeitsfluss-Steuerbefehlen; Bereitstellen wenigstens einer Cache-Datenbank, in welche die Anwenderdaten und ein aus wenigstens einer Basisdatenbank selektierter Basisdatenauszug geladen werden; Bereitstellen von Services zum Durchführen von Datenverarbeitungsschritten auf der Grundlage von aus der Cache-Datenbank bezogenen Daten; Erzeugen eines auf den Aufruf wenigstens eines Services gerichteten Requests als Reaktion auf einen Arbeitsfluss-Steuerbefehl, wobei der Service asynchron bezüglich der Anzeige einer neuen Anzeigeseite aufgerufen wird, wenn der Aufbau der neuen Anzeigeseite unabhängig von einem Ergebnis des mittels des Request aufgerufenen Services ist. Optional können zumindest die auf asynchrone Service-Aufrufe gerichteten Requests mittels wenigstens einer Warteschlange serialisiert werden.

Die von den Services als Antwort auf einen Request zurück erhaltenen Service-Daten können in der Cache-Datenbank gespeichert werden. Die Cache-Datenbank kann in diesem Fall als "Postfach" für die Service-Daten verwendet werden.

Das Laden des Basisdatenauszugs in die Cache-Datenbank kann iterativ erfolgen. So kann der Inhalt der aus der Basisdatenbank gelesenen Basisdaten Hinweise auf zusätzlich zu ladende Basisdaten enthalten. Derartige Hinweise können erst nach einem ersten Ladevorgang erkannt und (durch Nachladen von Basisdaten) bearbeitet werden. Auch die nachgeladenen Basisdaten können wiederum derartige Hinweise enthalten. Erst das Vorsehen der Cache-Datenbank ermöglicht einen solchen iterativen Ladevorgang.

Die Erfindung kann als Hardware-Lösung, als Software-Lösung oder als eine Kombination beider Lösungen implementiert werden. Was eine Software-Lösung anbelangt, ist die Erfindung auf ein Computerprogrammprodukt mit Programmcodemitteln zum Durchführen des Verfahrens gerichtet, wenn das Computerprogrammprodukt auf einem Computersystem abläuft. Das Computerprogrammprodukt kann auf einem computerlesbaren Aufzeichnungsmedium abgespeichert sein.

### Kurzbeschreibung der Zeichnung

Weitere Vorteile, Einzelheiten und Weiterbildungen der Erfindung ergeben sich aus der nachfolgenden Beschreibung einer bevorzugten Ausführungsform sowie aus den Zeichnungen. Es zeigen:
- Figur 1: eine schematische Darstellung der seriellen Abarbeitung zweier Requests;
- Figur 2: eine schematische Darstellung der parallelen Abarbeitung zweier Requests;
- Figur 3: eine schematische Darstellung der parallelen Abarbeitung gleichartiger Requests;
- Figur 4: eine schematische Darstellung der synchronen Abarbeitung eines Requests;

- Figur 5: eine schematische Darstellung der asynchronen Abarbeitung eines Requests;
- Figur 6: eine schematische Darstellung zweier asynchroner Request, die nicht serialisiert sind;
- Figur 7: eine schematische Darstellung eines Systems gemäß einer Ausführungsform der Erfindung;
- Figur 8: eine schematische Darstellung der funktionellen Komponenten des Systems gemäß Fig. 7;
- Figur 9: ein schematisches Ablaufdiagramm, das die Funktionsweise des Systems gemäß Fig. 7 veranschaulicht;
- Figur 10: ein weiteres, schematisches Ablaufdiagramm, das genauere Einzelheiten der Funktionsweise des Systems gemäß Fig. 7 illustriert;
- Figur 11: die Implementierung des Systems gemäß Fig. 7 in einem Arbeitsfluss zur Bearbeitung eines Kreditantrages; und
- Figur 12: ein Beispiel eines mehrere Bearbeiter involvierenden Arbeitsflusses zur Bearbeitung eines Kreditantrags.

### Beschreibung eines bevorzugten Ausführungsbeispiels

Im Folgenden wird die Erfindung anhand eines bevorzugten Ausführungsbeispiels für die computerunterstützte Bearbeitung eines Kreditantrags im Rahmen eines Standardkreditprozesses (SKP) erläutert. Die der Erfindung zugrunde liegenden Aspekte lassen sich jedoch im Zusammenhang mit anderen Arbeitsflüssen verwenden.

Vor einer näheren Erläuterung des Ausführungsbeispiels werden zunächst die für ein Verständnis der Erfindung maßgeblichen Begriffspaare seriell/parallel sowie synchron/asynchron erläutert. Die Erläuterung erfolgt anhand von Anfragen ("Requests"), die von einer ersten Systemkomponente an eine zweite Systemkomponente geschickt werden.

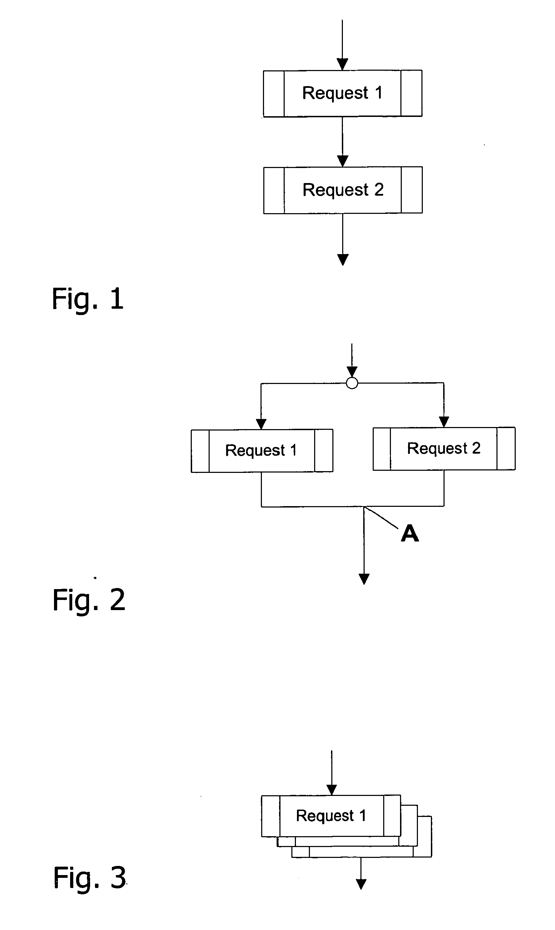

Zwei Requests laufen sequentiell, wenn die Requests nacheinander abgearbeitet werden (Fig. 1). Zwei Requests laufen hingegen parallel, wenn zu irgendeinem Zeitpunkt der Verarbeitung des ersten Requests gleichzeitig der zweite Request abgearbeitet wird (Fig. 2). Der in Fig. 2 mit 'A' gekennzeichnet Punkt ist ein (optionaler) Synchronisationspunkt. An dieser Stelle muss die Verarbeitung der beiden Requests abgeschlossen sein, bevor im Ablauf weitergegangen wird. Fig. 3 zeigt den Fall, dass der gleiche Request für unterschiedliche Objekte parallel ausgeführt wird (z.B. paralleles Speichern von mehreren elektronischen Dokumenten).

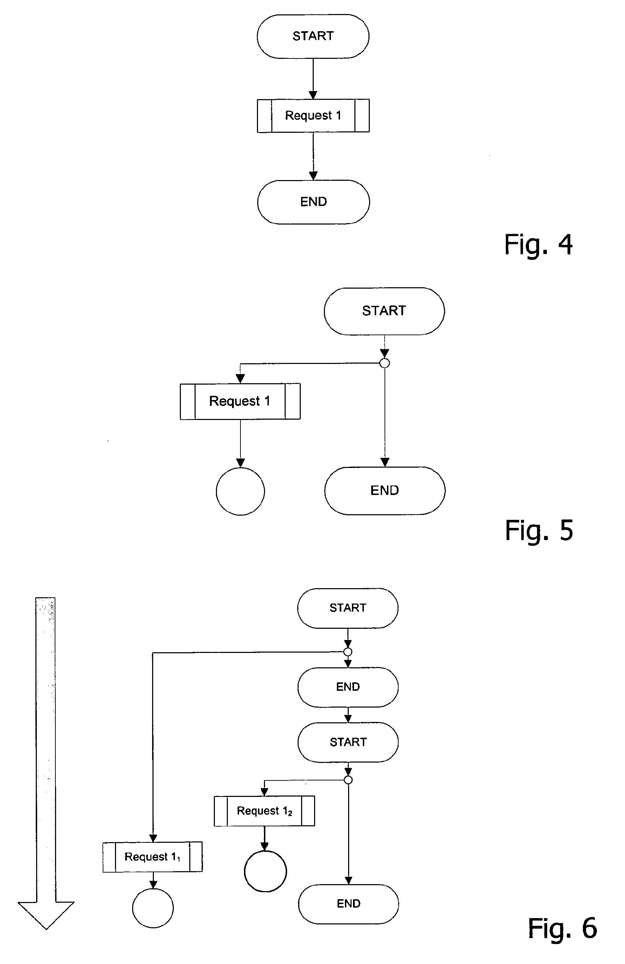

Für eine Definition der Begriffe synchron/asynchron ist die Berücksichtigung der aufrufenden Funktion bzw. des aufrufenden Prozesses notwendig. Ein Request wird synchron ausgeführt, wenn die aufrufende Funktion auf die Beendigung des Requests wartet. Ein synchroner Ablauf ist in Fig. 4 dargestellt: ein Anwender aktiviert z.B. einen "Speichern & Weiter" - Button auf einer angezeigten Bildschirmseite. Die Anwendung ruft daraufhin den Request "Request 1" auf und kann die nächste Bildschirmseite erst dann darstellen, wenn der Request "Request 1" abgearbeitet wurde.

Ein Request wird asynchron ausgeführt, wenn die aufrufende Funktion den Request zwar startet, aber nicht auf dessen Beendigung wartet. Ein asynchroner Request ist in Fig. 5 dargestellt: ein Anwender aktiviert z.B. einen "Speichern & Weiter" - Button auf einer angezeigten Bildschirmseite. Die Anwendung startet den Request "Request 1" und stellt die nächste Seite dar, ohne auf die Beendigung des Requests "Request 1" zu warten.

Bei asynchronen Vorgängen soll im vorliegenden Ausführungsbeispiel verhindert werden, dass sich gleichartige Requests "überholen", wenn sie nicht serialisiert werden. Unter gleichartigen Request werden z.B. solche Requests verstanden, die auf dieselben Felder einer Tabelle zugreifen. Hierzu folgendes, in Fig. 6 veranschaulichte Beispiel (vereinfachend wird im Beispiel davon ausgegangen, dass ein Aufruf zweimal direkt hintereinander ausgeführt wird). Der grau hinterlegte Pfeil symbolisiert den zeitlichen Ablauf, d.h. ein weiter unten stehender Request wird später ausgeführt.
Bei systembedingt variierenden Verarbeitungszeiten kann es vorkommen, dass der zuerst ausgelöste Request 1₁ erst nach dem Request 1₂ abgearbeitet wird. Beinhalten die einzelnen Requests beispielsweise Schreibzugriffe auf eine Datenbank, besteht die Gefahr, dass aktuellere Daten des Request 1₂ mit veralteten Daten des Request 1₁ überschrieben werden. Eine Möglichkeit, dieses Problem zu umgehen, besteht darin, einen Queuing-Algorithmus zu implementieren, der für die "Serialisierung" und erforderlichenfalls auch die Synchronisierung (vgl. Fig. 2) gleichartiger Requests zuständig ist.

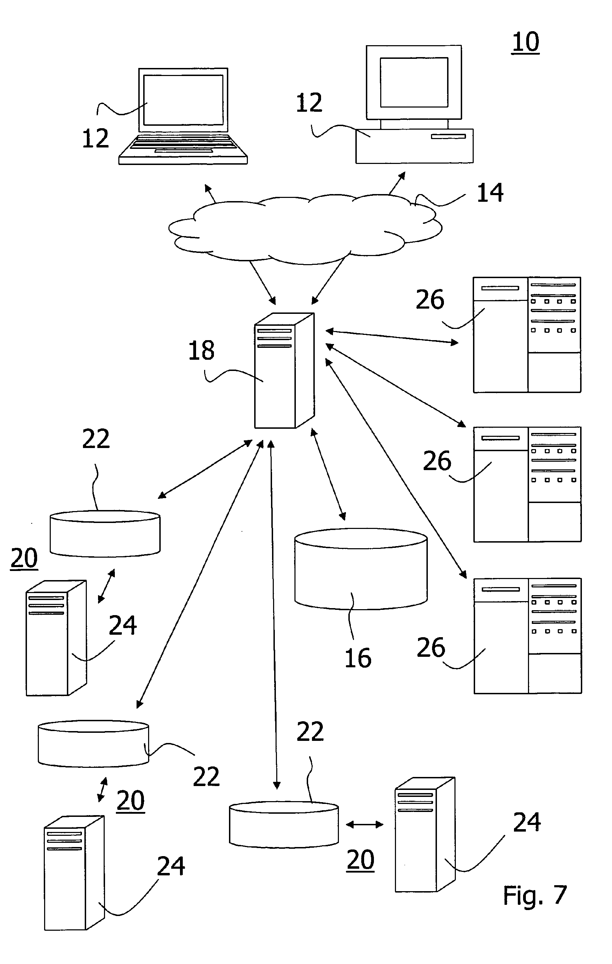

Fig. 7 zeigt ein Ausführungsbeispiel eines Computersystems 10 zur arbeitsflussbasierten Datenverarbeitung. Das Computersystem 10 umfasst mehrere Anwenderterminals 12. Auf jedem der Anwenderterminals 12 läuft ein Web-Browser, der in der Hypertext Markup Language (HTML) geschriebene Webseiten verarbeiten und auf Bildschirmen der Anwenderterminals 12 anzeigen kann. Die Anwenderterminals 12 fungieren daher aus Anwendersicht jeweils als ein Web-Frontend (WFE).

Die Anwenderterminals 12 haben über ein Netzwerk 14 (z.B. ein Intranet oder das Internet) Zugriff auf eine zentrale Cache-Datenbank 16. Der Zugriff auf die Cache-Datenbank 16 erfolgt über einen Server 18. Auf dem Server 18 laufen einerseits (aus Sicht der Anwenderterminals 12) Anwendungsprogramme. Andererseits laufen auf dem Server 18 auch Programme zur Verwaltung der Datenbank 16. Bei einer alternativen Ausführungsform laufen die Programme zur Verwaltung der Datenbank 16 auf einem separaten Datenbank-Server (nicht dargestellt).

In die Cache-Datenbank 16 werden einerseits Anwendereingabedaten geladen, die von Anwendern mittels der Anwenderterminals 12 eingegeben wurden. Auf der anderen Seite wird in die Cache-Datenbank 16 in Abhängigkeit von den Anwendereingaben und den Informationsbedürfnissen nachgelagerte Services ein Basisdatenauszug geladen. Die Basisdaten werden von Basis-Systemen 20 bezogen. Jedes Basis-System 20 beinhaltet einen eigene Basis-Datenbank 22 zur Speicherung der Basisdaten sowie einen der jeweiligen Basis-Datenbank 22 zugeordneten Server 24 zur Verwaltung der Basisdaten. Bei den Basisdaten handelt es sich um vergleichsweise langlebige Daten, die nicht oder jedenfalls nicht häufig modifiziert werden. Auf die Basis-Systeme 20 wird nicht nur von der Cache-Datenbank 16 zugegriffen, sondern auch von einer Vielzahl weiterer Systeme, welche in Fig. 7 nicht dargestellt sind und welche die Pflege der Basisdaten ermöglichen bzw. ebenfalls die Basisdaten verarbeiten.

Im Zusammenhang mit dem SKP umfassen die Basisdaten beispielsweise in einer ersten Basis-Datenbank 22 gehaltene Kundendaten (einschließlich Kundenstrukturdaten über die rechtliche Struktur eines Firmenkundenkonglomerats). In einer zweiten Basis-Datenbank 22 werden Basisdaten über bestehende Kunden-Engagements (einschließlich Daten über bereits existierende Hypotheken und/oder Kredite eines bestimmten Kunden) gehalten. Weitere Basisdaten, nämlich Deckungsobjekte, werden in einer dritten Basis-Datenbank 22 gehalten. Aus bankfachlicher Sicht erfüllen alle Deckungsobjekte den gleichen Zweck für die Bank. Sie dienen ihr als Sicherheit für Kredite. In der dritten Basis-Datenbank 22 werden die einzelnen Deckungsobjekte (z.B. Depotwerte, Bürgschaften, Kontoguthaben) über Deckungsanteile den Deckungskontrakten, d.h. laufenden Krediten oder Anträgen, zugeordnet.

Das in Fig. 7 dargestellte Computersystem umfasst ferner mehrere Server-Systeme 26 mit Schreib-/Lesezugriff von der Cache-Datenbank 16. Jeder Server 26 stellt durch eine oder mehrere Services die Verarbeitungslogik zur Verfügung. Im vorliegenden Ausführungsbeispiel handelt es sich dabei um die Verarbeitungslogik zur Abwicklung von SKP. Einigen oder allen der Server 26 kann eine eigene Service-Datenbank (nicht dargestellt) zugeordnet sein.

Die in die Cache-Datenbank 16 geladenen Basisdaten besitzen eine begrenzte Gültigkeit. Die Begrenzung der Gültigkeit ist von Bedeutung, um die Aktualität der jeweils von den Servern 26 verarbeiteten Basisdaten zu gewährleisten. In vielen Anwendungs-Szenarien (und vor allem im SKP) ist die Datenaktualität ein wichtiger Garant, um ein zuverlässiges Verarbeitungsergebnis zu erhalten. Bei der Kreditbeurteilung geht mit der Datenaktualität zusätzlich eine Minimierung des Kreditausfallrisikos einher. Im vorliegenden Ausführungsbeispiel wird die Datenaktualität dadurch gewährleistet, dass der Basisdatenauszug (oder ein Teil hiervon) in der Cache-Datenbank 16 regelmäßig gelöscht wird und im Anschluss daran z.B. per File-Transfer (z.B. für Stammdaten wie Kunden- oder Kundenstrukturdaten) oder synchron (z.B. bei Aufruf eines bestimmten Geschäftsfalles aus einer Service-Datenbank) ein Datenneubezug aus allen oder einer Auswahl der Basis-Datenbanken 22 und etwaiger Service-Datenbanken erfolgt. Der Datenneubezug per File-Transfer erfolgt beispielsweise nächtlich, damit von der Cache-Datenbank 16 ein tagesaktueller Basisdatenauszug zur Verfügung gestellt werden kann.

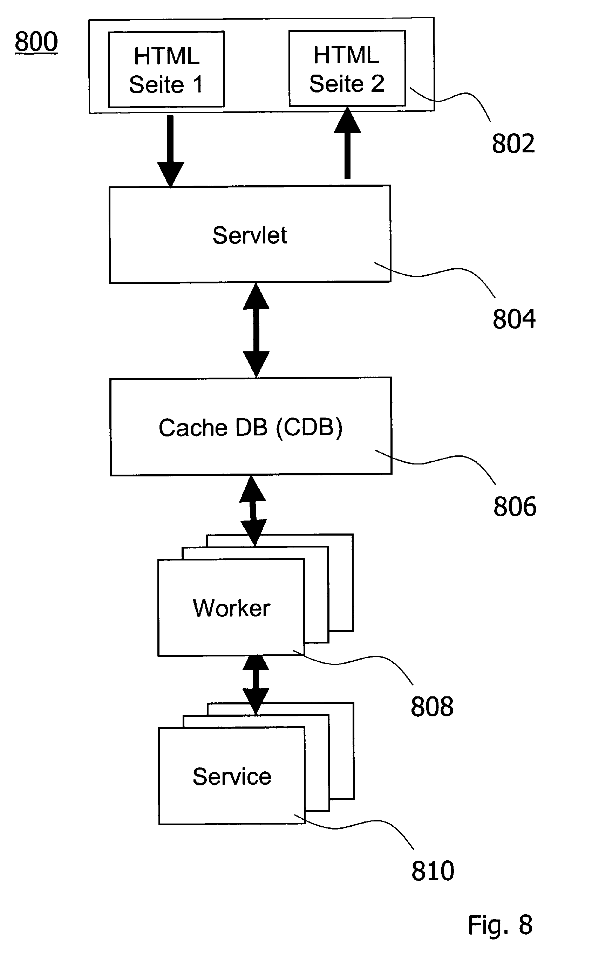

In Fig. 8 ist die Aufgabenverteilung 800 der Komponenten des Computersystems 10 gemäß Fig. 7 schematisch und in verschiedene Schichten unterteilt dargestellt. Die in Figur 7 dargestellten Anwenderterminals 12 beinhalten eine Anwenderschnittstelle 802 in Gestalt eines WFE (oberste Schicht). Das WFE gestattet die Darstellung von HTML-Seiten. Mittels der HTML-Seiten erfolgt die Dateneingabe und Datenausgabe. Die Dateneingabe wird durch grafische Mussfeldindikatoren unterstützt. Eine wichtige Komponente jeder HTML-Seite ist eine Navigationshilfe. Die Navigationshilfe zeigt dem Anwender, an welcher Stelle eines mehrere Stationen umfassenden Arbeitsflusses er sich gerade befindet. Ferner erfolgt auf der Anwenderschnittstellenschicht 802 eine erste Datenvalidierung in Gestalt einer Formatprüfung (mittels Java-Script). Die Formatprüfung stellt z.B. sicher, dass ein richtiges Datumsformat verwendet wird. Bei Fehleingaben wird eine entsprechende Meldung (z.B. in Gestalt eines Pop-Up) angezeigt.

Unterhalb der Anwenderschnittstellenschicht 802 ist ein Anwendungsprogramm ("Anwendungsschicht") in Form eines Java-Servlet 804 vorgesehen. Das Servlet 804 läuft auf dem Server 18 und übernimmt das Schreiben von Daten zur Cache-Datenbank 16 sowie das Lesen von Daten von der Cache-Datenbank 16. Des Weiteren erstellt das Servlet 804 die aufgrund der jeweiligen Datenkonstellation vorgesehene HTML-Seite für die Anwenderschnittstellenschicht 802 und umfasst die diesbezügliche Verarbeitungslogik. Eine weitere Aufgabe des Servlet 804 besteht in der Initiierung und Koordinierung unterschiedlicher Request-Typen. Für den Fall, dass nach Eingabe eines Arbeitsfluss-Steuerbefehls auf einer ersten HTML-Seite (z.B. durch Aktivieren eines "Speichern & Weiter" - Button) einer oder mehrere synchrone Requests angestoßen werden, stellt das Servlet 804 sicher, dass erst nach Abarbeiten sämtlicher synchroner Request die nächste HTML-Seite angezeigt wird. Mit anderen Worten, das Servlet 804 wartet mit dem Generieren der nächsten HTML-Seite, bis für jeden gestarteten synchronen Request eine Systemantwort vorliegt. Im Fall eines oder mehrerer asynchroner Requests ist es nicht erforderlich, mit dem Anzeigen der nächsten HTML-Seite zu warten, bis eine Systemantwort auf den oder die asynchrone Requests vorliegt. Allerdings kann es sein, dass bestimmte Funktionalitäten erst dann zur Verfügung stehen, wenn der oder die asynchronen Requests abgearbeitet wurden. In einem solchen Fall stellt das Servlet 804 sicher, dass erst nach Abarbeiten der betreffenden asynchronen Requests die Funktionalität auf der Anwenderschnittstellenschicht 802 zur Verfügung gestellt wird.

Unterhalb der Schicht des Servlet 804 ist eine Datenbankschicht 806 mit der in Fig. 7 dargestellten Cache-Datenbank 16 vorgesehen. Die Cache-Datenbank 16 umfasst eine Vielzahl relationaler Tabellen, in die Daten geschrieben und aus denen Daten gelesen werden. Die Cache-Datenbank 16 stellt damit den Datenpool für verschiedene Service-Requests bereit und sendet die entsprechenden Requests an die darunter liegende Schicht (Worker-Schicht 808). Eine weitere Aufgabe der Datenbankschicht 806 besteht darin, Validierungen von Datenobjekten vorzunehmen und etwaige Objektfolgeverarbeitungen aufzurufen (z.B. können zur Vollständigkeitspflege Daten aus den Basissystemen neu- oder nachgeladen werden). Die Datenbankschicht 806 ist außerdem für die Zusammenstellung der Daten für die Darstellung einer HTML-Seite verantwortlich (also für die Zusammenstellung von fachlichen Daten, etwaigen Meldungen sowie von Daten für den Aufbau einer Arbeitsfluss-Übersichtsdarstellung auf der HTML-Seite).

Auf der Datenbankschicht 806 sind ferner zwei getrennte Warteschlangen angesiedelt. In eine erste Warteschlage werden neue Service-Requests geschrieben. In einer zweiten Warteschlange erfolgen Einträge dann, wenn ein mittels eines Request angeforderter Service abgeschlossen wurde. Aus der zweiten Warteschlange lässt sich folglich der Request-Status in Erfahrung bringen. Im vorliegenden Ausführungsbeispiel sind die Warteschlangen als spezielle Tabellen implementiert, in denen für jeden Request ein neuer Datensatz (Record) angelegt wird. Der für einen Record angelegte Datensatz enthält jeweils eine Usersession ID (zur Zuordnung eines Requests zu einem bestimmten Anwenderterminal 12), einen Record-Typ (der den aufzurufenden Service sowie die jeweils an den Service zu übergebenden Daten angibt) sowie eine fortlaufend vergebene Laufnummer zu Serialisierungszwecken. Die Record-Einträge für einen bestimmten Request werden vom Servlet 804 ausgelöst.

Wie bereits erwähnt, werden die Service-Requests von der Datenbankschicht 806 mittels Warteschlangen an die darunter liegende Worker-Schicht 808 übergeben. Die Java-basierte Worker-Schicht 808 liest die Request-Warteschlange aus, arbeitet die ausgelesenen Service-Requests ab und ruft die entsprechenden Services mit den Daten (Basisdaten und/oder Eingabedaten) aus der Cache-Datenbank 16 auf. Ferner schreibt die Worker-Schicht 808 die von den Services als Antwort auf die Service-Requests empfangenen Service-Daten und Service-Meldungen auf in die Cache-Datenbank 16 zurück. Die Cache-Datenbank 16 fungiert in dieser Hinsicht als ein Request-bezogenes "Postfach", aus dem die Service-Daten und Meldungen bei Bedarf (z.B. beim synchronen oder asynchronen Aufbau einer neuen Seite) abgerufen werden können.

Eine weitere Aufgabe der Worker-Schicht 808 ist die Vereinheitlichung ("Mapping") unterschiedlicher Datenstrukturen zwischen der darüber liegenden Datenbankschicht 806 einerseits und einer darunter liegenden Service-Schicht 808 andererseits. Die Worker-Schicht 808 ermöglicht ferner ein Lastverteilung (z.B. bei Request-Spitzen) und verbessert die Skalierbarkeit des Gesamtsystems bei einer anwachsenden Anzahl von Anwenderterminals und Service-Zugriffen.

Die Service-Schicht 810 bildet schließlich die unterste Schicht in der schematischen Darstellung gemäß Fig. 8. Die Service-Schicht 810 beinhaltet die in Fig. 7 dargestellten Server 26, welche die jeweilige Verabeitungslogik (z.B. in C++) zur Verfügung stellen und darüber hinaus für technische und fachliche Validierungen verantwortlich sind. Jedem oder einigen der Server 26 auf der Service-Schicht 810 kann eine oder mehrere Datenbanken (nicht dargestellt) zugeordnet sein, um Service-Daten zu speichern.

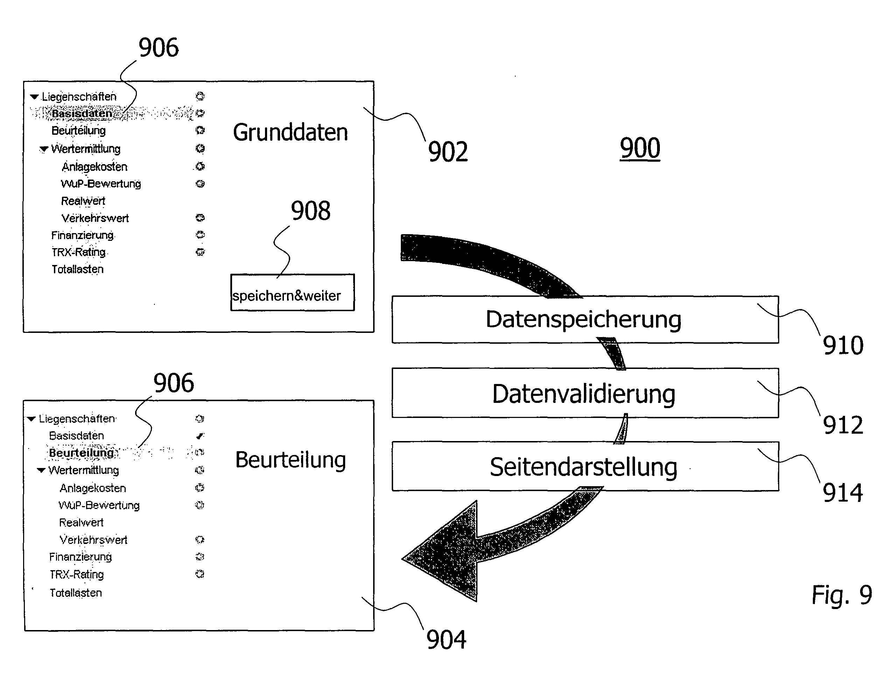

In Fig. 9 ist beispielhaft ein Ausschnitt eines Arbeitsflusses 900 im Zusammenhang mit dem SKP dargestellt. Bei dem Arbeitsfluss 900 handelt es sich um die Erfassung oder Neubeurteilung von Liegenschaften (Immobilien), welche als Deckungen für einen Kreditantrag dienen. Insgesamt umfasst der Arbeitsfluss 900 eine Vielzahl einzelner Stationen, von denen zwei in Fig. 9 gezeigt sind.

Allgemein betrachtet zeigt der in Fig. 9 dargestellte Ausschnitt den bereits in Fig. 8 angedeuteten Übergang von einer ersten Arbeitsfluss-Station (erste HTML-Seite 902) zu einer zweiten Arbeitsfluss-Station (zweite HTML-Seite 904). Jede HTML-Seite 902, 904 umfasst eine Navigationshilfe ("Navbar") 906, welche die aktuelle Station des Arbeitsflusses 900 anzeigt und den direkten Sprung zu anderen (erlaubten) Stationen als der logisch nächsten gestattet. Die erste HTML-Seite 902 ermöglicht die Erfassung der Grunddaten von Liegenschaften, während die zweite HTML-Seite 904 zur Eingabe von Beurteilungsdaten für die Liegenschaften auffordert. Der Übersichtlichkeit halber sind die Dateneingabefelder der HTML-Seiten 902, 904 in Fig. 9 nicht dargestellt.

Die HTML-Seite 902 besitzt zur Eingabe eines Arbeitsfluss-Steuerbefehls ein Steuerelement 908 in Gestalt eines "Speichern & Weiter" - Buttons. Nach der (vollständigen) Eingabe der Anwenderdaten (z.B. von Geschäftsfalldaten) durch einen Anwender wird der Übergang zu einer neuen Station des Arbeitsflusses dadurch initiert, dass der Anwender mit einem Zeigegerät (z.B. einer Maus) das Steuerelement 908 aktiviert. Im Anschluss an die Aktivierung des Steuerelements 908 erfolgt nach einer Formatvalidierung der Anwenderdaten noch auf der HTML-Seite 902 (nicht dargestellt) in einem Schritt 910 das Abspeichern der eingegeben Daten in der Cache-Datenbank und es werden einer oder mehrere Service-Requests gestartet. Anschließend werden die eingegebene Daten in der Datenbankschicht validiert (Schritt 912). Sofern es sich bei den Requests um synchrone Requests handelt, wird die nächste HTML-Seite 904 erst nach erfolgreicher Verarbeitung dieser Requests angezeigt. Bei asynchronen Requests wird die nächste HTML-Seite 904 unmittelbar nach Initiieren dieser Requests angezeigt. Das Anzeigen der HTML-Seite 904 geschieht in beiden Fällen in Schritt 914. Deutlich zu erkennen ist, dass in der Navigationshilfe 906 auf der HTML-Seite 904 der Menüpunkt "Basisdaten" (nicht zu verwechseln mit den aus den Basissystemen bezogenen Daten) mit einem Häkchen gekennzeichnet ist. Dies bedeutet, dass die Anwenderdateneingabe fehlerlos absolviert wurde.

Aufgrund von Performance-Überlegungen (schneller Seitenaufbau/zügiges Abarbeiten der einzelnen Arbeitsfluss-Stationen) werden die für den Aufbau der HTML-Seite 904 (Schritt 914) nicht unbedingt erforderlichen Service-Requests asynchron durchgeführt. Ist also beispielsweise mit einem bestimmten Service-Aufruf ein auf Service-Ebene stattfindender Datenverarbeitungsvorgang verbunden, dessen Ergebnis keinen Einfluss auf den Aufbau der nachfolgenden Seite besitzt, wird der Datenverarbeitungsvorgang asynchron gestartet. Dabei wird der Service von einer auf der Anwenderebene oder der Datenbankebene laufende Anwendung (z.B. dem in Fig. 8 dargestellten Servlet 804) aufgefordert, eine bestimmte Aufgabe zu erledigen, ohne dass die Anwendung mit dem Darstellen der nächsten Seite auf die Beendigung des Service-Aufrufs warten würde. Die vom Service zurück erhaltenen Daten werden in der Cache-Datenbank zwischengespeichert, bis sie beispielsweise für einen späteren Seitenaufbau benötigt werden.

Es kann jedoch passieren, dass der Anwender durch Aktivieren eines Menüpunkts in der Navigationshilfe 906 auf eine Seite springt, für deren Darstellung ein zuvor asynchron gestarteter Service-Request beendet sein muss. Hierzu ein Beispiel: mit dem Ändern des Betrages eines Kreditantrages auf einer hierfür vorgesehenen HTML-Seite ("Antragsdefinition") und dem anschließenden Speichern der Seite muss die Belehnung der mit dem Kreditantrag verbundenen Liegenschaften neu berechnet werden. Da bei der Erfassung der Antragsdaten die Liegenschaftsbelehnung auf keiner der hierfür abzuarbeitenden HTML-Seiten dargestellt wird, können die entsprechenden Berechnungsaufrufe asynchron gestartet werden. Wechselt der Anwender jedoch von der Seite "Antragsdefinition" direkt (mittels der Navigationshilfe 906) auf eine Liegenschafts-Übersichtsseite, muss vor der Darstellung dieser Seite sicher gestellt werden, dass alle benötigten Liegenschaftsberechnungen abgeschlossen sind.

In solchen Situation, wenn also die für die Darstellung einer Seite notwendigen Services noch nicht vollständig abgearbeitet wurden, wird dem Anwender zunächst eine Leer- bzw. Meldungsseite angezeigt. Gleichzeitig wird die Hinweismeldung "Die für diese Verarbeitung notwendigen Daten sind noch nicht verfügbar. Bitte warten ..." dargestellt. Es wird nun fortlaufend im Hintergrund überprüft, ob die entsprechenden Services bereits abgeschlossen wurden. Entsprechende Hinweise lassen sich beispielsweise einem dem Service bzw. dem entsprechenden Request zugeordneten Status-Eintrag in einer der Warteschlangen entnehmen. Sobald der Service abgeschlossen ist, wird die angeforderte Seite automatisch (und ohne weitere Benutzeraktion) dargestellt. Die für das Erzeugen dieser Seite möglicherweise erforderlichen Service-Daten werden der Cache-Datenbank entnommen, in die sie im Anschluss an die Beendigung des Services gelesen wurden.

Aus technischen Gründen werden neue (synchrone oder asynchrone) Requests erst dann initiiert, wenn alle ausstehenden Requests eines bestimmten Anwenders abgearbeitet wurden. Speichert also beispielsweise ein Anwender für einen Kreditantrag, der mit einer Liegenschaft verbunden ist, eine bestimmte Antragssumme, wird mit der Speicherung des Antrags ein asynchroner Request für den Liegenschafts-Berechnungsvorgang angestoßen. Sollte der Anwender nun die Antragssumme ändern, wird mit dem Senden eines neuen Request gewartet, bis die mit der ersten Antragsspeicherung verbundene Berechnung abgeschlossen wurde.

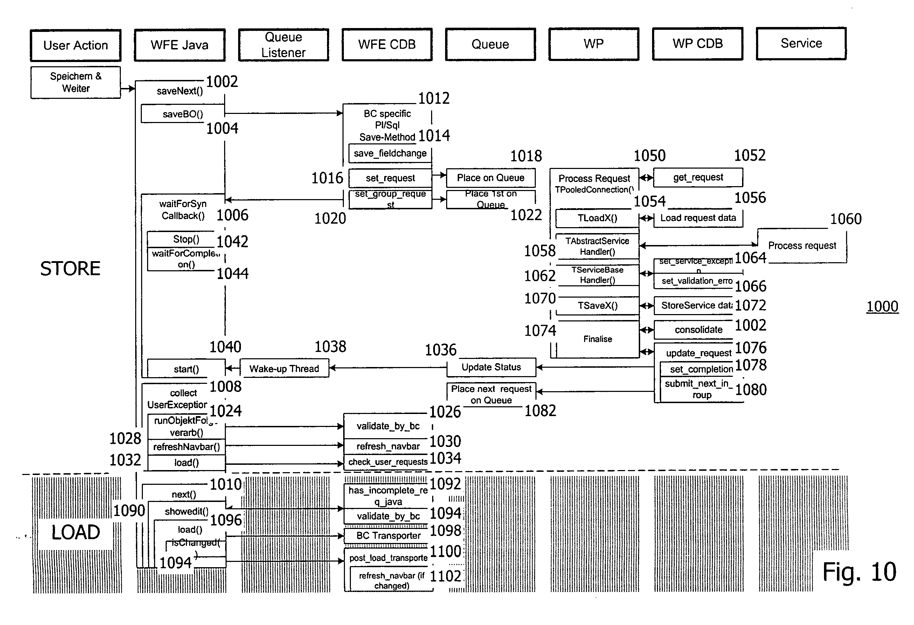

Die in Fig. 9 schematisch dargestellten Vorgänge werden nun unter Bezugnahme auf das Ablaufdiagramm 1000 von Fig. 10 näher erläutert. In Fig. 10 ist insbesondere die Verwendung von Warteschlangen (Queues) zur Realisierung von Requests dargestellt. In der Darstellung gemäß Fig. 10 sind die Funktionen und Methoden der Cache-Datenbank (bzw. des zugeordneten Datenbank-Servers) in solche unterteilt, die dem WFE zur Verfügung gestellt werden (vierte Spalte von links) und solche, die den Worker-Prozessen zur Verfügung gestellt werden (zweite Spalte von rechts). Von der logischen Abfolge der einzelnen Schritte her gesehen könnten die zweite und die dritte Spalte von rechts vertauscht werden.

Fig. 10 zeigt die einzelnen Funktionen und Methoden, welche zur Implementierung der in Fig. 9 dargestellten Schritte der Datenspeicherung 910, Datenvalidierung 912 und Seitendarstellung 914 vorgesehen sind. Außerdem ist in Fig. 10 die Funktionsweise von auf der Ebene der Cache-Datenbank angesiedelten Warteschlagen (Queues) erläutert. Auf Datenbankebene sind einander zugeordnete Request- und Antwortwarteschlagen (also zwei separate Warteschlangen) vorhanden. Die Warteschlangen gestatten eine Synchronisierung der wie oben erläutert aus Performance-Überlegungen implementierten asynchronen Requests. Wie bereits erwähnt, werden Requests insbesondere dann asynchron initiiert, wenn der mit dem Request verbundene Service keine Auswirkungen auf die Darstellung der logisch nächsten Seite hat. Für Verarbeitungen, die sich auf die Anzeige der logisch nächsten Seite auswirken, werden hingegen synchrone Requests initiiert.

Der in Fig. 10 dargestellte Ablauf beginnt im Anschluss an die Dateneingabe durch Aktivieren des Buttons "Speichern & Weiter" (Bezugszeichen 908 in Fig. 9).

Das Aktivieren des Buttons "Speichern & Weiter" startet die Java-Methode saveNext() 1002 des WFE. Die Methode saveNext() 1002 umfasst die Methoden saveBO() 1004, waitForSynCallback() 1006, collectUserExceptions() 1008 und next() 1010. Die Methode saveBO() 1004 schreibt die seitenspezifischen Eingabedaten in Form eines Datenobjekts auf die Cache-Datenbank und kommuniziert in diesem Zusammenhang mit einer PL/SQL Save-Methode 1012 auf der Ebene der Cache-Datenbank. Die Methode 1012 wiederum umfasst eine Funktionalität save_fieldchange 1014 zum Speichern der erhaltenen Eingabedaten in relationalen Tabellen der Cache-Datenbank. Die Methode 1012 umfasst ferner eine Funktionalität set_request 1016, mit der ein neuer Request (in Schritt 1018) in eine Request-Warteschlage, die von Worker-Prozessen ausgelesen wird, gestellt wird. Der in Schritt 1018 in die Warteschlage gestellte Request bezieht sich auf die Anforderung eines bestimmten Service, der mit der aktuellen Seite und den über diese Seite eingegebenen Daten verknüpft ist. In manchen Situationen müssen mehrere unabhängige Service-Verarbeitungsschritte durchgeführt werden. Zu diesem Zweck ist die Funktionalität set_group_request 1020 vorgesehen. Diese Funktionalität sendet eine Mehrzahl von Requests nacheinander über die Warteschlange (Schritt 1022) zu den Worker-Prozessen.

Gleichzeitig mit dem Schreiben der seitenspezifischen Eingabedaten auf die Cache-Datenbank mittels saveBO() 1004 wird der Validierungsprozess (Methode collectUserExceptions() 1008) gestartet. Die Methode 1008 verfügt über eine Funktionalität runObjektFolgeverarb() 1024 zum Aufrufen der PL/SQL-Funktionalität validate_by_BC() 1026 auf Datenbankebene. Die Funktionalität 1026 validiert pro Seite alle Datenobjekte, die von einem Speichervorgang betroffen sind. Die Validierung mittels der Funktionalität 1026 erkennt, falls der Anwender eine Seite nicht vollständig ausgefüllt hat. Um eine solche Erkennung zu ermöglichen, sind sämtliche Anzeigeregelungen des WFEs auch in der Cache-Datenbank erfasst. Sollte eine Seite nicht vollständig ausgefüllt sein, wird eine entsprechende Validierungs-Meldung erzeugt und auf dem WFE dargestellt.

Die weiteren Funktionalitäten refreshNavbar() 1028 und refresh_navbar() 1030 auf Ebene des WFE bzw. auf Datenbankebene lösen unabhängig von der Darstellung einer neuen HTML-Seite den Neuaufbau der Navigationshilfe (Bezugszeichen 906 in Fig. 9) aus. Es handelt sich hierbei um eine Standardfunktionalität des "Speichern & Weiter"-Ablaufs. Die einander entsprechenden Funktionalitäten load() 1032 auf WFE-Ebene und check_user_requests 1034 auf Datenbankebene setzen spezifische "No data found" Service-Meldungen, die an den Anwender gerichtet sind, in der Cache-Datenbank zu Validierungsmeldungen um. Ferner ermöglicht die Funktionalität 1034 das erneute Initiieren fehlgeschlagener Requests und das Zurückgeben entsprechender Fehlermeldungen für die jeweilige Seite an den Anwender.

Die Methode waitForSynCallback() 1006 des WFE stellt sicher, dass mit der Ausführung des nächsten Java-Statements gewartet wird, bis alle synchron gestarteten Requests für den aktuell angeforderten Speichervorgang abgearbeitet wurden. Hierbei macht sich die Methode 1006 die von der PL/SQL-Funktion 1020 zurückgegebenen, eindeutigen Request-Kennzeichnungen (MSG_EDs) und das Request-Statusmodell (ein abgeschlossener Request wird in Schritt 1036 in der Antwort-Warteschlange mit "FINISHED" gekennzeichnet) zunutze. Die Antwort-Warteschlange wird von einer Methode Wake-up Thread 1038 einer Überwachungskomponente fortlaufend auf Statusänderungen überprüft, die dann an die Funktionalität start() 1040 der Methode 1006 berichtet werden. Solange der oder die synchronen Requests nicht vollständig abgearbeitet wurden, unterbindet die Methode 1006 (mittels der Funktionalitäten 1042 und 1044) die Ausführung des nächsten Java-Statements. Werden bei einem Speichervorgang ausschließlich asynchrone Requests initiiert, gelangt die Methode 1006 nicht zum Einsatz.

Die Worker-Prozesse übernehmen die Kommunikation zwischen der Datenbankebenen (Warteschlangen) und der Service-Ebene. Zu diesem Zweck umfassen die Worker-Prozesse die Java-Methode Process Request TPooled Connection() 1050. Die Methode 1050 kommuniziert mit der Datenbank-Methode get_request 1052, um einen weiteren Request für dessen Bearbeitung aus der Warteschlange auszulesen. Die Methode 1052 wird in einer Schleife fortlaufend von einem Worker-Prozess aufgerufen, sobald der Worker-Prozess mit der Abarbeitung des von ihm zuletzt ausgelesenen Request fertig ist.

Die Worker-Prozesse lesen also in einem ersten Schritt einen noch nicht ausgelesenen, abzuarbeitenden Request aus der Warteschlange. Anschließend werden mittels der Worker-Methode TIoadX() 1054 die vom zugeordneten Service abzuarbeitenden Daten aus der Cache-Datenbank gelesen. Zu diesem Zweck kommuniziert die Methode 1054 mit der Datenbank-Methode Load_request_data 1056. Diese Methode 1056 lädt die dem Request zugeordneten Daten aus den Datenbanktabellen und übergibt sie an die Methode 1054. Anschließend ruft die Worker-Methode TAbstractService-Handler() 1058 den dem aus der Warteschlange gelesenen Request zugeordneten Service auf.
Zusammen mit dem Service-Request übergibt die Methode 1058 auch die aus der Cache-Datenbank gelesenen und zu verarbeitenden Daten an die entsprechende Service-Methode 1060. Nach Beendigung des Verarbeitungsvorgangs übergibt die Methode 1060 die im Rahmen der Verarbeitung erhaltenen Daten (soweit erforderlich) und eine Nachricht betreffend die Beendigung der Verarbeitung zurück an die Methode 1058. Außerdem werden auch auf der Service-Ebene Validierungen durchgeführt und die Validierungsergebnisse (erforderlichenfalls) an die Methode 1058 übergeben.

Zu den Validierungen auf Service-Ebene, die zu Fehlermeldungen führen können, zählen technische und "fachliche" Validierungen. So werden Ausnahmesituationen, die eine Weiterverarbeitung auf Service-Ebene unmöglich machen, als "technische Fehler" dem Benutzer gemeldet. Die Meldung wird vom Service aufgesetzt und von den Worker-Prozessen an die Cache-Datenbank weitergeleitet. Damit die Konsistenz der Daten beibehalten wird, muss sichergestellt werden, dass bei einem technischen Fehler keine weiteren Verarbeitungsschritte auf Service-Ebene stattfinden. Auf der WFE-Ebene ist eine Logik implementiert, die nach jedem Request die Anzahl technischer Fehler überprüft, bevor im Prozess fortgefahren wird. Diese Logik kann (jedenfalls zum Teil) auch in den Worker-Prozessen implementiert werden, indem z. B. zuerst geprüft wird, ob alle von einem Service benötigten Informationen auf der Cache-Datenbank vorhanden sind, bevor ein Request an den entsprechenden Service weitergeleitet wird.

Validierungen, welche den Inhalt mehrerer Eingabenfelder des WFE berücksichtigen, werden als "fachliche" Validierungen bezeichnet. Die fachlichen Validierungen umfassen Vergleiche wenigstens zweier Felder der gleichen Eingabeseite des gleichen Objekts, wenigstens zweier Felder unterschiedlicher Eingabeseiten des Objekts und/oder wenigstens zweier Felder unterschiedlicher Objekte. Pro Fehler und betreffende Seite erscheint eine entsprechende Validierungs-Meldung. Zusätzlich oder alternativ zur fachlichen Validierung auf Service-Ebene kann eine fachliche Validierung auf Datenbankebene erfolgen.

Zur Handhabung von Service-initiierten Validierungsmeldungen umfassen die Worker-Prozesse die Methode TServiceBaseHandler() 1062. Diese Methode 1062 kommuniziert mit den Methoden set_service_exception 1064 und set_validation_error 1066 auf Datenbankebene. Die Methode 1064 fügt fachliche Validierungen und Mussfeld-Validierungen der Services direkt in eine entsprechende Tabelle ein. In diese Tabelle werden zusätzlich von der Methode 1066 Validierungs-Meldungen betreffend technische Service-Exceptions eingefügt.

Die Worker-Prozesse beinhalten außerdem eine Methode TsaveX() 1070, welche mit einer korrespondierenden Methode StoreService data() 1072 auf der Datenbankebene kommuniziert. Die Methode 1070 leitet die von den Services zurückerhaltenen Daten an die Cache-Datenbank weiter, wo sie von der Methode 1072 in die zugeordneten Datenbank-Tabellen geladen werden.

Eine weitere Methode Finalise 1074 berichtet an die Cache-Datenbank (Methode update_request 1076) über den Abschluss der Service-Verarbeitungsschritte. Die Methode 1076 umfasst eine Methode set_completion 1078, welche den Status des entsprechenden Requests in der Antwort-Warteschlange aktualisiert. Desweiteren umfasst die Methode 1076 die Methode submit_next_in_group 1080. Diese Methode 1080 veranlasst, dass der nächste Request einer Request-Gruppe in der Request-Warteschlange platziert wird.

Die WFE-Methode next() 1010 ist dafür zuständig, eine angegebene HTML-Seite aufzurufen. Die Methode 1010 umfasst die Methode showedit() 1090, welche für die eigentliche Erstellung der HTML-Seite aufgrund der implementierten Anzeigelogik und aufgrund der aktuellen Datenkonstellation verantwortlich ist. Außerdem verarbeitet diese Methode 1090 seitenrelevante asynchrone Requests und gibt die oben angegebene Meldung (bzw. eine leere HTML-Seite) aus, falls noch nicht alle im Zusammenhang mit der aktuellen Seitenerstellung erforderlichen asynchron gestarteten Services abgeschlossen sein sollten. Die Methode 1090 kommuniziert in diesem Zusammenhang mit den korrespondierenden Datenbank-Methoden has_incomplete_req_java 1092 und validate_by_BC 1094.

Die Methode 1090 umfasst die Methode load() 1096, welche die für die Erstellung einer Seite erforderlichen Daten und Meldungen aus der Cache-Datenbank liest. Die fachlichen Daten werden auf Datenbank-Ebene mittels der Methode BC_Transporter 1098 gesammelt. Für das Sammeln von seiten- und benutzerspezifischen Validierungsmeldungen ist auf Datenbank-Ebene hingegen die Methode post_load_transporter 1100 zuständig. Die Methode 1100 umfasst eine Methode refresh_navbar (if changed) 1102, welche je nach Bedarf Informationen für den Neuaufbau der Navigationshilfe an eine hierfür verantwortliche WFE-Methode i-sChanged() 1104 übergibt.

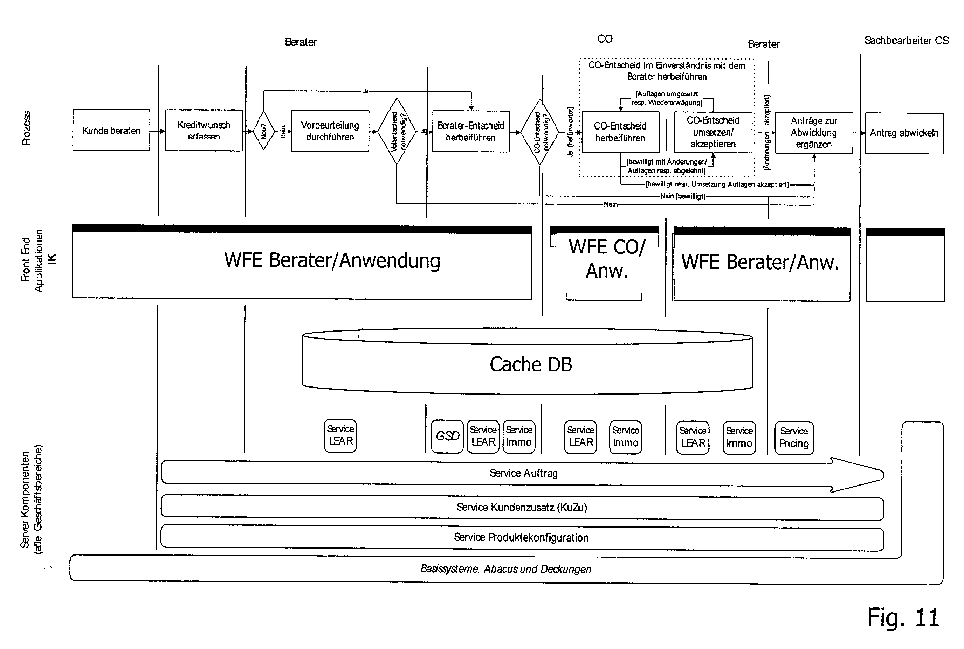

Fig. 11 zeigt eine beispielhafte Implementierung des vorstehend erläuterten Arbeitsfluss-Steuermechanismus im Rahmen der in Fig. 12 dargestellten Bearbeitung eines Kreditantrags.

Im oberen Abschnitt der Fig. 11 sind die in Fig. 12 dargestellten Benutzerrollen und Arbeitsfluss-Stationen nochmals angegeben ("Prozess"). Unterhalb des Kreditvergabe-Prozesses sind die entsprechenden WFEs und Anwendungen (Bezugszeichen 12 und 18 in Fig. 7) dargestellt. Unterhalb der Anwendungen wiederum ist die Cache-Datenbank angesiedelt. Als unterste Schicht in Fig. 11 sind verschiedene Service-Systeme und Basis-Systeme veranschaulicht.

Die Basis-Systeme Abacus und Deckungen stellen die in die Cache-Datenbank zu ladenden Hypotheken- und Deckungsdaten und erforderlichenfalls weitere Basisdaten zur Verfügung. Ein Neubezug der Basisdaten erfolgt im Anschluss an eine z.B. nächtliche Löschung der Cache-Datenbank dann, wenn ein Berater oder ein andere Bearbeiter einen neuen Geschäftsfall anlegt oder einen bereits existierenden Geschäftsfall weiterverarbeiten, kopieren, usw. will. Die Basisdaten werden in diesem Fall also selektiv für einen bestimmten Geschäftsfall aus den Basisdatenbanken geladen. Weitere Daten können aus den Service-Systemen selektiv (z.B. geschäftsfallbezogen) in die Cache-Datenbank geladen werden.

Die Service-Systeme sind jeweils einer oder mehreren Stationen des in Fig. 11 oben dargestellten Arbeitsflusses zugeordnet. Der Service Auftrag beispielsweise dient der Sammlung abwicklungsrelevanter Daten im Lauf der Abarbeitung eines Geschäftsfalles. Der Service Kundenzusatz dient der zusätzlichen Speicherung von im Rahmen eines Geschäftsfalles erhobenen Kundeninformationen. Der Service Produktekonfiguration bildet den Produktekatalog des SKP und ist ein Referenzsystem ohne kunden-oder geschäftsfallbezogene Daten. Die Basissysteme dienen dem Neubezug und dem Zurückschreiben von Basisdaten. Der Service LEAR dient der Speicherung aller im WFE erfassten Daten sowie der automatischen Vorbeurteilung (Triage), der Kundenbeurteilung, des Systemsentscheids, sowie der Historisierung des Entscheides mit allen entscheidrelevanten Daten.

Der Service GSD stellt Kunden- und Kundenstrukturdaten zur Verfügung. Der Service GSD ist hier zwar als "Service" dargestellt, er ist jedoch den Basis-Systemen zuzuordnen. Die GSD-Daten können nach jeder periodischen Löschung der Cache-Datenbank per nächtlichem File-Transfer oder anderweitig in die Cache-Datenbank geladen werden, um dort unmittelbar zur Verfügung zu stehen.

Mit dem Service IMMO werden die meisten der im WFE erfassten Liegenschaftsdaten und Liegenschaftsbewertungsdaten gespeichert. Der Service Pricing schließlich ist eine Komponente zur Berechnung von Preisen im Kreditgeschäft. Neben den für den Kunden gültigen Zinsen und Konditionen wird im Service Pricing auch die gesamte unterliegende Preisstruktur festgelegt.

Die Implementierung der Erfindung ermöglicht auf Grund des vereinfachten und schnellen Datenbezugs (Cache-Datenbank) sowie der Verwendung asynchron gestarteter Service-Requests eine deutliche Laufdauerreduzierung und eine damit einhergehende Antwortzeitverkürzung. Die Cache-Datenbank kann im Zusammenhang mit den asynchron gestarteten Services als "Postfach" für Service-Daten fungieren. Die einzelnen Anwenderterminals können die oftmals viele Dutzend HTML-Seiten somit flüssig und ohne unnötige Wartezeiten durcharbeiten. Dies beschleunigt den Arbeitsfluss erheblich.

Für die Fachwelt ist offensichtlich, dass zahlreiche Modifikationen und Weiterbildungen der Erfindung möglich sind. Aus diesem Grund ist der Umfang der Erfindung lediglich durch die beigefügten Ansprüche beschränkt.

## Patentansprüche

1. Computersystem (10) zur arbeitsflussbasierten Datenverarbeitung insbesondere im Zusammenhang mit einem computerunterstützten Kreditentscheid, wobei im Rahmen des Arbeitsflusses eine Vielzahl von Anzeigeseiten (902, 904) mittels Arbeitsfluss-Steuerbefehlen interaktiv durchlaufen werden, mit
- wenigstens einem Anwenderterminal (12) mit einer Anwenderschnittstelle (802, 908) für die Seitenanzeige und für die Eingabe von Anwenderdaten und von Arbeitsfluss-Steuerbefehlen;
- einem oder mehreren Basissystemen (20) mit zugehörigen Basisdatenbanken (22), in denen Basisdaten enthalten sind;
- wenigstens einer Cache-Datenbank (16, 806), in welche die Anwenderdaten und ein selektierter Basisdatenauszug geladen werden;
- einem oder mehreren Service-Systemen (26) mit Services (810) zum Durchführen von Datenverarbeitungsschritten auf der Grundlage von aus der Cache-Datenbank (16, 806) bezogenen Daten; und
- einem Mechanismus (804) zum Erzeugen eines auf den Aufruf wenigstens eines Services (810) gerichteten Request als Reaktion auf einen Arbeitsfluss-Steuerbefehl, wobei der Service (810) asynchron bezüglich der Anzeige einer neuen Anzeigeseite (904) aufgerufen wird, wenn der Aufbau der neuen Anzeigeseite (904) unabhängig von einem Ergebnis des mittels des Request aufgerufenen Services (810) ist.

2. Computersystem nach Anspruch 1, **dadurch gekennzeichnet,**
**dass** wenigstens eine Warteschlange zur Serialisierung der auf asynchrone Service-Aufrufe gerichteten Requests vorhanden ist.

3. Computersystem nach Anspruch 2, **dadurch gekennzeichnet,**
**dass** wenigstens ein Worker-Prozess (808) funktional zwischen der Warteschlange und den Service-Systemen (26) angeordnet ist, wobei der Worker-Prozess (808) zum Auslesen der Warteschlange und zum Weiterleiten der ausgelesenen Requests an die Service-Systeme (26) vorgesehen ist.

4. Computersystem nach Anspruch 3, **dadurch gekennzeichnet,**
**dass** wenigstens einigen der Requests sowohl Daten in der Cache-Datenbank (16, 806) also auch ein oder mehrere Services (810) zugeordnet sind, wobei der Worker-Prozess (808) nach dem Auslesen eines Requests aus der Warteschlange die dem Request zugeordnete Daten aus der Cache-Datenbank (16, 806) ausliest und an den dem Request zugeordneten Service (810) weiterleitet.

5. Computersystem nach Anspruch 3 oder 4, **dadurch gekennzeichnet,**
**dass** der Worker-Prozess (808) von dem Service-System (26), an das der Request weitergeleitet wurde, eine Antwort empfängt.

6. Computersystem nach Anspruch 5, **dadurch gekennzeichnet,**
**dass** die Antwort vom Service-System (26) übergebene Service-Daten enthält, die der Worker-Prozess (808) in die Cache-Datenbank (16, 806) schreibt.

7. Computersystem nach Anspruch 5 oder 6, **dadurch gekennzeichnet,**
**dass** die Antwort eine Validierungsmeldung bezüglich der an das Service-System (26) übergebenen Daten enthält.

8. Computersystem nach einem der Ansprüche 5 bis 7, **dadurch gekennzeichnet, dass** die Antwort auf den Status des Abarbeitens des Request gerichtet ist und der Worker-Prozess (808) einen entsprechenden Status-Eintrag in der Warteschlange für die Requests oder in einer separaten Antwort-Warteschlange vornimmt.

9. Computersystem nach einem der Ansprüche 1 bis 8, **dadurch gekennzeichnet, dass** die Services (810) eine Funktionalität zur Speicherung von Anwenderdaten beinhalten

10. Computersystem nach einem der Ansprüche 1 bis 9, **dadurch gekennzeichnet, dass** die Arbeitsfluss-Steuerbefehle einen Speicherbefehl umfassen.

11. Computersystem nach einem der Ansprüche 1 bis 10, **dadurch gekennzeichnet,**
**dass** die Arbeitsfluss-Steuerbefehle einen Befehl zur Anzeige einer neuen Anzeigeseite umfassen.

12. Computersystem nach Anspruch 11, **dadurch gekennzeichnet,**
**dass** die neue Anzeigeseite die im Arbeitsfluss logisch folgende Anzeigeseite ist.

13. Computersystem nach einem der Ansprüche 1 bis 12, **dadurch gekennzeichnet,**
**dass** zumindest die in die Cache-Datenbank (16, 806) geladenen Basisdaten eine begrenzte Gültigkeit aufweisen.

14. Computersystem nach einem der Ansprüche 1 bis 13, **dadurch gekennzeichnet,**
**dass** zumindest die in die Cache-Datenbank (16, 806) geladenen Basisdaten in bestimmten Abständen gelöscht werden und anschließend ein Neubezug der Basisdaten erfolgt.

15. Computersystem nach einem der Ansprüche 1 bis 14, **dadurch gekennzeichnet,**
**dass** die wenigstens eine Warteschlange in der Cache-Datenbank (16, 806) angelegt ist.

16. Computersystem nach einem der Ansprüche 1 bis 15, **dadurch gekennzeichnet,**
**dass** dann, wenn der Aufbau der neuen Anzeigeseite (904) abhängig von einem Ergebnis des mittels des Request aufgerufenen Services ist, der Mechanismus zur Request-Erzeugung (804) als Reaktion auf einen Arbeitsfluss-Steuerbefehl einen Request erzeugt, der auf den Aufruf wenigstens eines synchron bezüglich der Anzeige der neuen Anzeigeseite ablaufenden Service (810) gerichtet ist.

17. Verfahren zur arbeitsflussbasierten Datenverarbeitung insbesondere im Zusammenhang mit einem computerunterstützten Kreditentscheid, wobei im Rahmen des Arbeitsflusses eine Vielzahl von Anzeigeseiten mittels Arbeitsfluss-Steuerbefehlen interaktiv durchlaufen werden, enthaltend die Schritte:
- Bereitstellen wenigstens eines Anwenderterminals (12) mit einer Anwenderschnittstelle (802, 908) für die Seitenanzeige und für die Eingabe von Anwenderdaten und von Arbeitsfluss-Steuerbefehlen;
- Bereitstellen wenigstens einer Cache-Datenbank (16, 806), in welche die Anwenderdaten und ein aus wenigstens einer Basisdatenbank (22) selektierter Basisdatenauszug geladen werden;
- Bereitstellen von Services (810) zum Durchführen von Datenverarbeitungsschritten auf der Grundlage von aus der Cache-Datenbank (16, 806) bezogenen Daten;
- Erzeugen eines auf den Aufruf wenigstens eines Service (810) gerichteten Requests als Reaktion auf einen Arbeitsfluss-Steuerbefehl, wobei der Service (810) asynchron bezüglich der Anzeige einer neuen Anzeigeseite (904) aufgerufen wird, wenn der Aufbau der neuen Anzeigeseite (904) unabhängig von einem Ergebnis des mittels des Request aufgerufenen Services (810) ist.

18. Verfahren nach Anspruch 17, **dadurch gekennzeichnet,**
**dass** von den Services (810) Service-Daten als Antwort auf den Request zurück erhalten und in der Cache-Datenbank (16, 806) zwischengespeichert werden.

19. Verfahren nach Anspruch 17 oder 18, **dadurch gekennzeichnet,**
**dass** die auf asynchrone Service-Aufrufe gerichteten Requests mittels wenigstens einer Warteschlange serialisiert werden.

20. Verfahren nach einem der Ansprüche 17 bis 19, **dadurch gekennzeichnet,**
**dass** das Laden des Basisdatenauszugs iterativ erfolgt, indem der Inhalt der aus der Basisdatenbank (22) gelesenen Basisdaten Hinweise enthält, welche weiteren Basisdaten in die Cache-Datenbank (16, 806) zu laden sind.

21. Computerprogrammprodukt mit Programmcodemitteln zum Durchführen des Verfahrens nach einem der Ansprüche 17 bis 20, wenn das Computerprogrammprodukt auf einem Computersystem (10) abläuft.

22. Computerprogrammprodukt nach Anspruch 21, abgespeichert auf einem computerlesbaren Aufzeichnungsmedium.
